# EUROPÄISCHE PATENTSCHRIFT

(11) **EP 2 304 865 B1**
(45) Veröffentlichungstag und Bekanntmachung des Hinweises auf die Patenterteilung: **04.10.2017**
(21) Anmeldenummer: 09769137.2
(22) Anmeldetag: 15.06.2009
(51) Int. Cl.: H02K 3/52

(54) **ELEKTRISCHE MASCHINE**
ELECTRIC MACHINE
MACHINE ÉLECTRIQUE

(30) Priorität: 24.06.2008 DE 102008002615
(43) Veröffentlichungstag der Anmeldung: 06.04.2011
(73) Patentinhaber: Robert Bosch GmbH, 70442 Stuttgart (DE)
(72) Erfinder: FASTERDING, Henning, 71706 Markgroeningen (DE); AMARAL, Daniel, Campinas-SP (BR)
(86) Internationale Anmeldenummer: PCT/EP2009/057352
(87) Internationale Veröffentlichungsnummer: WO 2009/156288

(56) Entgegenhaltungen:
- EP-A- 0 994 552
- EP-A- 1 257 041
- FR-A- 2 306 558
- JP-A- 8 205 496
- JP-A- 2002 223 551
- US-A1- 2008 061 651

## Beschreibung

### Stand der Technik

Die Erfindung betrifft eine elektrische Maschine, insbesondere Wechselstrom- bzw. Drehstromgenerator, die einen Rotor aufweist, der als Klauenpolläufer ausgebildet ist. Zwischen den beiden Klauenpolplatinen ist ein Spulenträger angeordnet, der eine Erregerwicklung trägt Die Erregerwicklung hat zwei Anschlussleiter, die jeweils mit einem am Rotor befestigten Stromversorgungselement (beispielsweise Schleifring) elektrisch leitfähig verbunden sind. Im Speziellen handelt die Erfindung von der Fixierung der Anschlussleiters um einen Fixierungsabschnitt. So ist beispielsweise aus dem US-Schriften US 6,172,434 B1, US 6,107,719 und US 5,898,252 bereits bekannt, wie die Anschlussdrähte befestigt werden können, ohne dass die auf verschiedene Abschnitte der Anschlussleiter wirkende Zentrifugalkraft zu groß wird.

Aus der FR 2306558 A ist eine elektrische Maschine bekannt, die einen Spulenträger aufweist. Um diesen Spulenträger ist die Erregerwicklung gewickelt. Der Spulenträger weist eine Wand auf, von der sich ein Fixierungsabschnitt erstreckt. Um diesen Fixierungsabschnitt, der sich zwischen zwei gleichpoligen Klauenpolen in axialer Richtung erstreckt, ist ein Anschlussleiters in Drehachsenrichtung des Rotors gewickelt.

Aus der EP 1257041 A2 ist ebenfalls eine elektrische Maschine bekannt, die einen Spulenträger aufweist. Um diesen Spulenträger ist auch dort die Erregerwicklung gewickelt. Der Spulenträger weist eine Wand auf, von der sich ein Fixierungsabschnitt erstreckt. Dieser Fixierungsabschnitt befindet sich ebenso zwischen zwei gleichpoligen Klauenpolen des Rotors.

Gegenüber den aus den genannten Schriften bekannten Fixierungsabschnitten besteht demgemäß die Aufgabe, den oder die Fixierungsabschnitte derartig zu gestalten, dass Kräfte verringert werden.

### Vorteile der Erfindung

Die erfindungsgemäC3e elektrische Maschine mit den Merkmalen des unabhängigen Anspruchs hat den Vorteil, dass durch die Anordnung des Fixierungsabschnitts zwischen dem Spulenträger und der Klauenpolplatine, sich der effektive Radius für diese Befestigungsstelle verringern lässt. Zentrifugalkräfte sind dadurch zwangsläufig reduziert. In diesem Zusammenhang lässt sich Material mit geringerer Festigkeit verwenden, so dass im Endeffekt höhere Temperaturen wegen des verringerten Einflusses der Zentrifugalkraft nicht länger als besonders kritisch angesehen werden können.

Durch die in den Unteransprüchen aufgeführten Maßnahmen sind vorteilhafte Weiterbildungen der elektrischen Maschine nach dem unabhängigen Anspruch möglich. Gemäß einem Unteranspruch ist vorgesehen, dass die Hinterschnitte des Fixierungsabschnitts durch Arme gebildet sind, wobei einer der Arme eine im Wesentlichen kürzere radiale Länge als der andere Arm aufweist. Diese Anordnung hat den Vorteil, dass der Anschlussleiter an dieser Stelle geordnet und möglichst kurz aneinander vorbeigeführt werden kann.

Ordnet man den Anschlussdraht in einer Nut in der Wand des Spulenträgers an, wobei die Nut in einer Drahtaufnahme zwischen Wand und Arm endet, so ist dadurch eine besonders kurze, auf kurzem Radius verlaufende Verbindung von der eigentlichen Erregerwicklung in die Fixierungsabschrtitte mögliche

Wird der Anschlussleiters um mindestens drei Seiten des Fixierungsabschnittes gewunden, so ergibt sich dadurch einerseits eine besonders gute Ausnutzung von möglichen Reibungskräften zum Verhindern zu großer Zentrifugalkräfte und andererseits ist es dadurch möglich, den Anschlussdraht nahezu radial nach außen zu führen. Dies hat beispielsweise den Vorteil, dass die Anschlußdrähte die Spule nicht unnötig verbreitern beispielsweise durch abgewinkelte Drahtlagen. Zu dem ist dadurch der Transport von vorgefertigten Halbzeugen aus Spulenträgern mit Erregerwicklung vereinfacht. Aus der Ausgestaltung der Erfindung, wonach vorgesehen ist, einen Teil des Fixierungsabschnitts zwischen der Erregerwicklung und einer der Klauenpolplatinen anzuordnen, ergibt sich der Vorteil, dass von den beiden Klauenpolplatinen, die einander gegenüberstehen, ein Druck in axialer Richtung (Drehachse des Rotors) auf den Fixierungsabschnitt ausgeübt werden kann. Demzufolge wird der Arm bzw. werden die Arme auf den um den Fixierungsabschnitt gewickelten Anschlussdraht gepresst. Es wird dadurch ganz besonders einfach verhindert, dass die Zentrifugalkräfte zu groß werden. Zur guten Ausnutzung des Raums ist vorgesehen, dass der Teil des Fixierungsabschnitts, der zwischen der Erregerwicklung und einer der Klauenpolplatinen angeordnet ist, in einer Mulde positioniert ist, die in der Klauenpolplatine eingearbeitet ist.

Wird der Teil des Fixierungsabschnitts, der zwischen der Erregerwicklung und einer der Klauenpolplatinen angeordnet ist, zusammen mit dem Anschlussdraht zwischen der Wand des Spulenträger und der Klauenpolplatine eingeklemmt, ist eine direkte Kraftübertragung auf den Anschlussdraht zwischen der Klauenpolplatine und dem Spulenträger möglich. Dies ergibt eine besonders kompakte Bauweise.

Besonders schonend hinsichtlich der Isolation des Anschlussdrahts ist es, wenn dieser zwischen der Wand des Spulenträgers und einem Arm des Fixierungsabschnitts eingeklemmt ist.

Wird der Anschlussdraht über einen Teil der um den Fixierungsabschnitt gewundenen Länge von einem nachgiebigen Schlauch umgeben, so ist eine besonders schonende Kraftübertragung auf den Anschlussdraht möglich, Der nachgiebige Schlauch hat den Vorteil, dass beim Einklemmen des Drahts zwischen einem Arm und der Wand unter Einfluss von Drehung nicht nur Haftreibung zwischen Draht, Schlauch und Wand bzw. Arm erzeugt wird, sondern durch die Nachgiebigkeit gleichzeitig auch in einer gewissen Weise ein Formschluss zwischen Wand, Arm und Draht erzeugt wird.

Wird der Schlauch zwischen der Wand des Spulenträgers und dem Arm eingeklemmt, erhält dieser eine unregelmäßige bzw. an den Raum zwischen Wand und Arm angepasste Form. Diese Form ist ein Zeichen für die bereits erwähnte Art, die Kraft zwischen Draht und Wand bzw. Arm zu übertragen. Durch diese unregelmäßige Form kann erkannt werden, dass ein guter Formschluss bzw. gute Kraftübertragung zwischen Draht bzw. dem Schlauch und der Umgebung aus Wand und Arm besteht. Gemäß einer weiteren Ausgestaltung der Erfindung ist vorgesehen, dass der Schlauch aus Gewebe oder aus Schaummaterial oder einem anderen nachgiebigerem Material als eine direkt auf den Draht aufgebrachte Lackisolation besteht.

Gemäß einer weiteren Ausgestaltung der Erfindung ist vorgesehen, dass der andere Anschlussleiter durch einen Schlitz in der Wand des Spulenträgers vorzugsweise direkt auf den Ringkörperabschnitt des Spulenträgers geführt ist. Es ist vorgesehen, dass sich die Klauenpolfinger entweder in axialer oder radialer Richtung erstrecken (Radialfluss- oder Axialflussmaschine).

Insgesamt lassen sich noch weitere Vorteile nennen: Des Weiteren lässt sich die Masse des Systems aus Befestigung und Draht verringern, so dass die Belastungen im Spulenträger verringert sind. Dementsprechend kann beispielsweise Material geringerer Festigkeit (in der Regel günstiger im Preis oder mit geringeren Materialstärken) verwenden (geringeres Gewicht, geringere Kosten). Ganz besonders durch die Verlagerung der Befestigungsstelle zwischen Klauenpolplatine und Wand lässt sich der Einfluss von pulsierender Bewegung um ein Vielfaches verringern, so dass die Gefahr von Ermüdungsbrüchen deutlich geringer ist.

### Zeichnungen

In den Zeichnungen ist ein Ausführungsbeispiel einer elektrischen Maschine dargestellt, Es zeigen:
- Fig. 1: einen Längsschnitt durch eine elektrische Maschine,
- Fig. 2: eine axiale Seitenansicht auf einen Spulenträger mit einem Fixierungsabschnitt,
- Fig. 3: ein Fixierungsabschnitt ohne den dort befestigten Anschlussleiter,
- Fig. 4: einen Querschnitt senkrecht zur Drehachsenrichtung durch den Fixierungsabschnitt,
- Fig. 5: eine Draufsicht auf den Fixierungsabschnitt mit eingelegtem Leiter,
- Fig. 6: einen Teillängsschnitt durch die in Fig. 1 rechte Klauenpotplatine 23,
- Fig. 7: einen Schnitt durch eine Klauenpolplatine und den Fixierungsabschnitt,
- Fig. 8: eine räumliche Ansicht eines Anschlussdrahts und dem Fixierungsabschnitt.

### Beschreibung

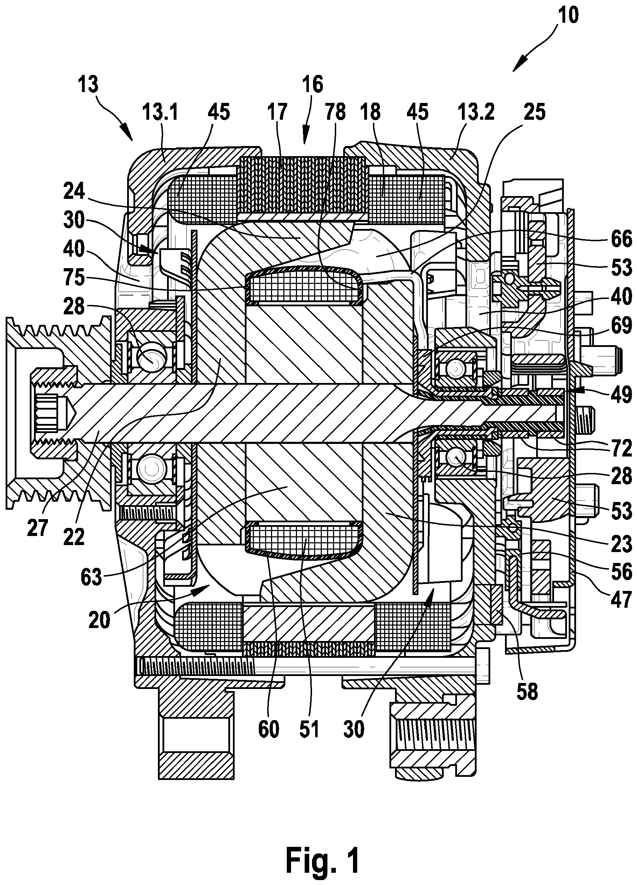

In Figur 1 ist ein Querschnitt durch eine elektrische Maschine 10, hier in der Ausführung als Generator bzw. Drehstromgenerator für Kraftfahrzeug, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u. a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurch treten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

Ein Spulenträger 60 ist radial außerhalb eines Polkerns 63 angeordnet. Der Spulenträger 60 hat die Aufgabe, die Erregerwicklung 51 sowohl gegenüber den Klauenpolplatinen 22 und 23 zu isolieren und andererseits im Rahmen einer Vorfertigung als formgebendes Element ganz besonders nachdem der Spulvorgang bezüglich des Erregerwicklungsdrahts beendet ist, zu wirken. Der Spulenträger 60 wird dabei mit zwei Anschlussleitern 66 axial über den Polkern 63 geschoben und im Anschluss daran zwischen den beiden Klauenpalplatinen 22 und 23 axial fixiert. Darüber hinaus übergreifen die Klauenpolfinger 24 und 25 die Erregerwicklung 51 und bilden somit nach radial außen eine Art Käfig, der eine unzulässige radiale Verlagerung der Erregerwicklung 51 verhindert. Die Anschlussleiters 66, in Fig. 1 ist nur einer dargestellt, sind zwischen zwei Klauenpolfingern 25, d. h. zwischen zwei sogenannten Polwurzeln, über die Klauenpolplatine 23 hinweggeführt und letztlich nach radial innen in Richtung zu einer hier nicht näher bezeichneten Kontaktfläche geleitet. An dieser Kontaktfläche, die mittels einer Stromschiene 69 mit einem Stromversorgungselement in Gestalt eines Schleifrings 72 verbunden ist, wird der Anschlussleiter bzw. ist der Anschlussleiter 66 Kontakt und Festigkeit gebend befestigt (angeschweißt, angelötet). Der Spulenträger 60 weist eine Wand 75 auf, die zwischen Erregerwicklung 51 und Klauenpolplatine 22 angeordnet ist. Analog dazu ist auf der anderen Seite des Spulenträgers 60, d. h. auf der der Schleifringbaugruppe 49 näher gelegenen Seite dieser ebenfalls mit einer Wand 78 versehen. Wie noch näher in weiteren Figuren zu zeigen sein wird, geht von dieser Wand 78 ein Fixierungsabschnitt 81 aus, der sich von der Wand 78 ausgehend erstreckt. Einer der Anschlussleiter, nämlich der Anschlussleiter 66 ist um den Fixierungsabschnitt 81 geschlungen.

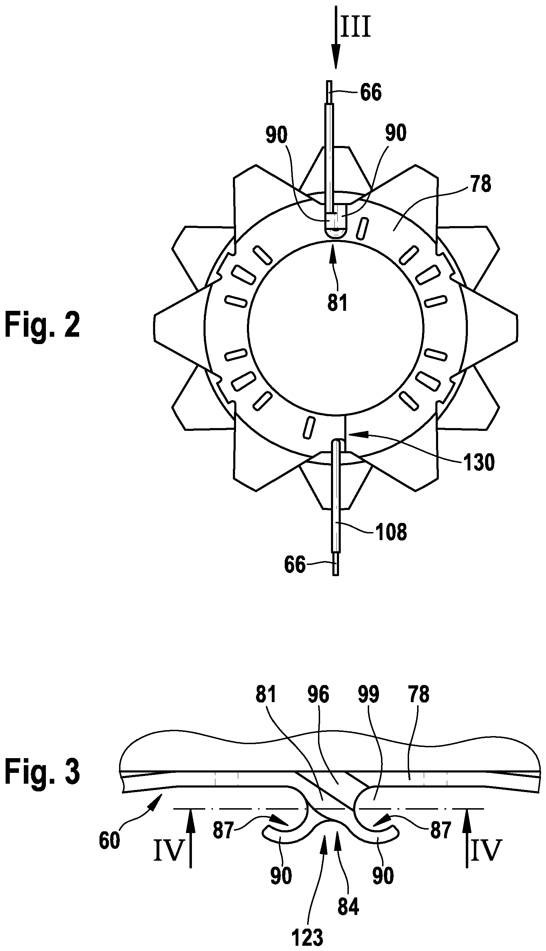

In Fig. 3 ist der Fixierungsabschnitt 81 zur besseren Übersichtlichkeit ohne den dort befestigten Anschlussleiters gezeigt. Wie dort gut zu erkennen ist, geht von der Wand 78 des Spulenträgers 60 ein Fixierungsabschnitt 81 aus, um den der Anschlussleiter 66 gemäß Fig. 2 geschlungen ist. Am von der Wand 78 abgewandten Ende 84 des Fixierungsabschnitts 81 weist dieser voneinander abgewandte Hinterschnitte 87 auf. Beide Hinterschnitte 87 sind durch Arme 90 gebildet.

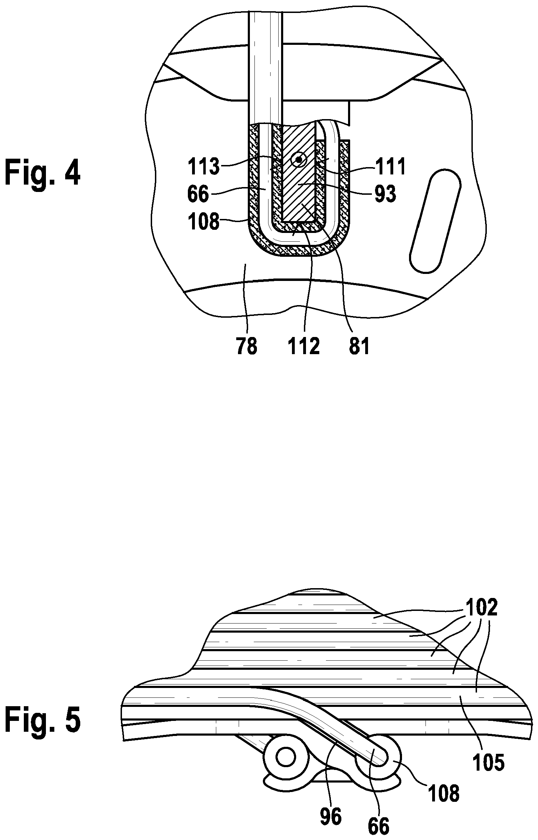

In Fig. 4 ist gemäß den Angaben in Fig. 3 ein entsprechender Querschnitt durch den Fixierungsabschnitt 81 dargestellt. Eine Querschnittsfläche 93 des Fixierungsabschnitts 81 ist senkrecht zu einer Wickelrichtung des Anschiussleiters 66 um den Fixierungsabschnitt 81 orientiert. Dies bedeutet, dass die Wickelrichtung durch die Achse definiert ist, um die herum der Anschlussleiter 66 gewickelt ist. Die Winkelrichtung ist des Weiteren in Drehachsenrichtung des Rotors 20 orientiert. Die Wickelrichtung ist demgemäß in Fig. 4 durch den in die Querschnittsfläche 93 einbeschriebenen Kreis mit ebenso einbeschriebenem Punkt angegeben. Man kann die Winkelrichtung bezüglich des Anschlussleiters 66 auch derart beschreiben, dass der Draht um eine Achse herum gewickelt ist, die erstens parallel zur Drehachsenrichtung des Rotors 20 ausgerichtet ist und zweitens durch die Querschnittsfläche 93 hindurchgeht.

Es ist demgemäß eine elektrische Maschine, insbesondere Wechselstromgenerator bekannt, mit einem Rotor 20, der eine Drehachsenrichtung hat, der als Klauenpolläufer ausgebildet ist, wobei der Rotor 20 u. a. zwei Klauenpolplatinen 22 und 23 aufweist, an deren Außenumfang Klauenpalfinger 24 und 25 angeordnet sind. Zwischen den beiden Klauenpolplatinen 22 und 23 ist ein Spulenträger 60 angeordnet, der eine Erregerwicklung 51 trägt, wobei die Erregerwicklung 51 zwei Anschlussleiter 66 hat, die jeweils mit einem am Rotor 20 befestigtem Stromversorgungselement in Gestalt von Schleifringen 72 elektrisch leitfähig verbunden sind, wobei der Spulenträger 60 eine Wand 78 aufweist, von der sich ein Fixierungsabschnitt 81 erstreckt, wobei einer der Anschlussleiter 66 um den Fixierungsabschnitt 81 geschlungen ist und der Fixierungsabschnitt 81 am von der Wand 78 abgewandten Ende 84 voneinander abgewandte Hinterschnitte 87 aufweist, wobei der Fixierungsabschnitt 81 eine Querschnittsfläche 93 aufweist, die senkrecht zu einer Wickelrichtung des Anschlussleiters 66 um den Fixierungsabschnitt 81 orientiert ist, wobei die Wickelrichtung in Drehachsenrichtung des Rotors 20 orientiert ist.

Gemäß der Darstellung in Fig. 3 sind die Hinterschnitte 87 durch Arme 90 gebildet. Wie bereits in Fig. 2 erkennbar ist, ist der in Fig. 2 links dargestellte Arm 90 wesentlich kürzer als der andere Arm 90, der in Fig. 2 auf der rechten Seite dargestellt ist. In Fig. 3 ist eine Nut 96 erkennbar, die in der Wand 78 angeordnet ist. Genau formuliert ist diese Nut 96 in die nach radial außen gerichtete Seite bzw. Kante der Wand 78 eingearbeitet. Diese Nut 96 beginnt auf der Stirnfläche bzw. an der Stirnfläche der Wand 78, die zu dem hier nicht dargestellten Draht der Erregerwicklung 51 gerichtet ist. Die Nut endet in einer Drahtaufnahme 99, die durch den Hinterschnitt 87 gebildet ist.

In Fig. 5 ist gezeigt, wie der Draht in die Anordnung gemäß Fig. 3 eingelegt ist. So zeigt Fig. 5 einige Windungen 102 des Drahts 105 der Erregerwicklung 51. Der Draht 105 endet in den bereits erwähnten Anschlussleitern 66, wobei der eine in der Figur 5 dargestellte Anschlussleiter 66 durch die Nut 96 in den Bereich außerhalb des Spulenträgers 60 geleitet wird. Der Anschlussleiter 66 wird dabei, ummantelt von einem schonenden Schlauch 108, in der Drahtaufnahme 99 im Wesentlichen nach radial innen geleitet, dort am Ende des ersten Arms 90 in etwa in Umfangsrichtung, siehe auch Fig. 4, zur zweiten Drahtaufnahme 99 geleitet und in dieser ebenfalls im Wesentlichen nach radial außen geleitet. Dadurch ist der Anschlussleiter 66 um mindestens drei Seiten des Fixierungsabschnitts 81 gesunden. Diese drei Seiten 111, 12 und 113 sind besonders gut in Fig. 4 zu erkennen.

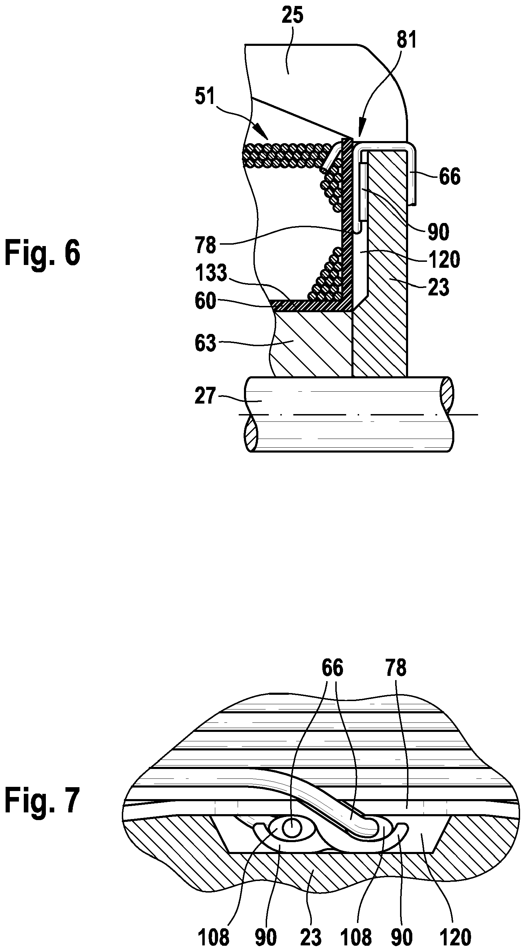

Fig. 6 zeigt einen Teillängsschnitt durch die in Fig. 1 rechte Klauenpolplatine 23. Auf der dem Spulenträger 60 zugewandten Seite der Klauenpolplatine 23 ist eine Mulde 120 eingearbeitet, die den Fixierungsabschnitt 81, die beiden Arme 90 und den um den Fixierungsabschnitt 81 gewickelten Anschlussleiter 66 mit dem Schlauch 108 aufnimmt. Es ist dabei vorgesehen, dass ein Teil des Fixierungsabschnitts 81 zwischen der Erregerwicklung 51 und einer der Klauenpolplatinen, hier der Klauenpolplatine 23, angeordnet ist. Idealer Weise ist dabei der Teil des Fixierungsabschnitts 81, der zwischen der Erregerwicklung 51 und der Klauenpolplatine 23 angeordnet ist, in einer Mulde 120 positioniert, die in der Klauenpolplatine 23 ist.

Das Ausführungsbeispiel gemäß Figur 1 zeigt bzgl. des Aufbaus des magnetisch leitfähigen Teils des Rotors 20 einen dreiteiligen Aufbau aus zwei Klauenpolplatinen 22 und 23 sowie einem Polkern 63. Alternativ dazu kann. - wie in Figur 6 angedeutet - stattdessen auch ein diesbezüglich zweiteiliger Aufbau gewählt werden. Der Polkern 63 ist dabei von seiner Geometrie her in Drehachsenrichtung geteilt Die dabei gedanklich entstehenden zwei Zylinder - ob symmetrisch oder bspw. mit unterschiedlichen Zylinderhöhen - sind dabei an die Klauenpolplatinen 22 und 23 bspw. durch einstückiges Schmieden angeformt, so dass nur noch eine Fuge zwischen den gegenpoligen Klauen 24 und 25 angeordnet ist.

In Fig. 7 ist ein Querschnitt durch die Klauenpolplatine 23, die Mulde 120 und den Fixierungsabschnitt 81 dargestellt. Gut zu erkennen ist dabei, wie im montierten Zustand die Klauenpoipfatine 23 den Fixierungsabschnitt 81 und die elastisch verformbaren Arme 90 so komprimiert, dass die Schläuche 108 deformiert werden und so eine besonders gute Verbindung gegen Radialkrafteinflüsse entsteht. Dabei wird auch deutlich, dass zwischen den Armen 90 eine Nut 123 angeordnet ist, siehe auch Fig. 3, damit die Arme 90 besonders gut in Richtung zur Wand 78 und auf die Schläuche 108 bewegt werden können. Es ist demnach vorgesehen, dass der Teil des Fixierungsabschnitts 81, der zwischen der Erregerwicklung 81 und der Klauenpolplatine 23 angeordnet ist, zusammen mit dem Anschlussdraht 66 zwischen der Wand 78 des Spulenträgers 60 und der Klauenpolplatine 23 eingeklemmt ist. Gemäß Fig. 7 ist der Anschlussdraht 66 zwischen der Wand 78 des Spulenträgers 60 und einem Arm 90 eingeklemmt. Der Anschlussdraht 66 ist über einen Teil der um den Fixierungsabschnitt 81 gewundenen Länge von einem nachgiebigen Schlauch 108 umgeben. Wie in Fig. 7 erkennbar ist, weist der Schlauch 108 zwischen der Wand 78 des Spulenträgers 60 und dem Arm 90 eine unregelmäßige Form auf und ist eingeklemmt zwischen Wand 78 und Arm 90.

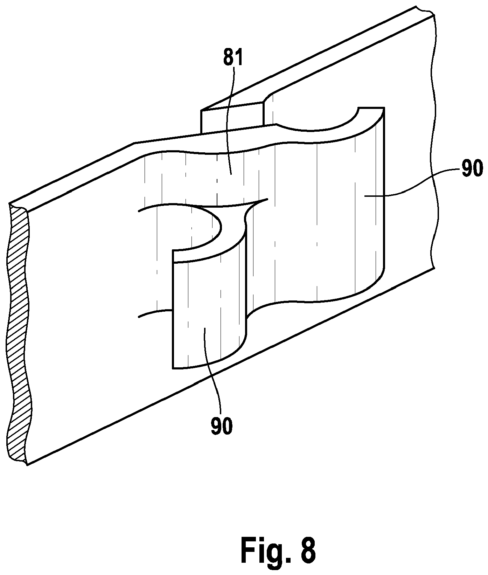

In Fig. 8 ist eine räumliche Ansicht des Fixierungsabschnitts 81 und der daran anschließenden Arme 90 gezeigt. Die in Fig. 8 dargestellte Ansicht korrespondiert mit der Darstellung in Fig. 2.

Bezüglich des Schlauchs 108 ist vorgesehen, dass dieser beispielsweise aus Gewebe oder aus Schaummaterial besteht, wobei selbstverständlich auch andere Materialien in Frage kommen. Das Schlauchmaterial ist nachgiebiger als direkt auf den Draht aufgebrachte Lack- oder lackartige Isolation, die in jedem Fall vorhanden ist, da andernfalls die Erregerwicklung 51 kurzgeschlossen wäre. Wie in Fig. 2 dargestellt ist, ist der andere Anschlussleiter 66 durch einen Schlitz in der Wand 78 des Spulenträgers 60 vorzugsweise direkt auf den Ringkörperabschnitt 133 geführt. Je nach Bauart der Maschine (Radialfluss- oder Axialflussmaschine) können sich die Klauenpolfinger 24 bzw. 25 in axialer oder radialer Richtung erstrecken. Gemäß den Darstellungen in Fig. 1 und Fig. 6 sind dort Klauenpolfinger gezeigt, die sich in axialer Richtung erstrecken.

## Patentansprüche

1. Elektrische Maschine, insbesondere Wechselstromgenerator, mit einem Rotor (20), der eine Drehachsenrichtung hat, der als Klauenpolläufer ausgebildet ist, wobei der Rotor (20) unter anderem zwei Klauenpolplatinen (22, 23) aufweist, an deren Außenumfang Klauenpolfinger (24, 25) angeordnet sind, wobei zwischen den beiden Klauenpolplatinen (22, 23) ein Spulenträger (60) angeordnet ist, der eine Erregerwicklung (51) trägt, wobei die Erregerwicklung (51) zwei Anschlussleiter (66) hat, die jeweils mit einem am Rotor (20) befestigten Stromversorgungselement elektrisch leitfähig verbunden sind, wobei der Spulenträger (60) eine Wand (78) aufweist, von der sich ein Fixierungsabschnitt (81) erstreckt, wobei einer der Anschlussleiter (66) um den Fixierungsabschnitt (81) geschlungen ist und der Fixierungsabschnitt (81) am von der Wand (78) abgewandten Ende (84) voneinander abgewandte Hinterschnitte (87) aufweist, wobei der Fixierungsabschnitt (81) eine Querschnittsfläche (93) aufweist, die senkrecht zu einer Wickelrichtung des Anschlussleiters (66) um den Fixierungsabschnitt (81) orientiert ist, wobei die Wickelrichtung in Drehachsenrichtung des Rotors (20) orientiert ist, **dadurch gekennzeichnet, dass** ein Teil des Fixierungsabschnitts (81) zwischen der Erregerwicklung (51) und eine der Klauenpolplatinen (22, 23) angeordnet ist.

2. Elektrische Maschine nach Anspruch 1, **dadurch gekennzeichnet, dass** die Hinterschnitte (87) durch Arme (90) gebildet sind, wobei insbesondere einer der Arme (90) eine im Wesentlichen kürzere radiale Länge als der andere Arm (90) aufweist.

3. Elektrische Maschine nach Anspruch 1 oder 2, **dadurch gekennzeichnet, dass** der eine Anschlussdraht (66) in einer Nut (96) in der Wand (78) angeordnet ist, wobei die Nut (96) in einer Drahtaufnahme (99) endet.

4. Elektrische Maschine nach einem der Ansprüche 1 bis 3, **dadurch gekennzeichnet, dass** der Anschlussleiter (66) um mindestens drei Seiten (111, 112, 113) des Fixierungsabschnittes (81) gewunden ist.

5. Elektrische Maschine nach Anspruch 4, **dadurch gekennzeichnet, dass** der Teil des Fixierungsabschnitts (81), der zwischen der Erregerwicklung (51) und einer der Klauenpolplatinen (22 und 23) angeordnet ist, in einer Mulde (120) positioniert ist, die in der Klauenpolplatine (23) ist.

6. Elektrische Maschine nach Anspruch 5, **dadurch gekennzeichnet, dass** der Teil des Fixierungsabschnitts (81), der zwischen der Erregerwicklung (51) und einer der Klauenpolplatinen (23, 22) angeordnet ist, zusammen mit dem Anschlussdraht (66) zwischen der Wand (78) des Spulenträgers (60) und der Klauenpolplatine (22, 23) eingeklemmt ist.

7. Elektrische Maschine nach Anspruch 6, **dadurch gekennzeichnet, dass** der Anschlussdraht (66) zwischen der Wand (78) des Spulenträgers (60) und einem Arm (90) eingeklemmt ist.

8. Elektrische Maschine nach einem der vorstehenden Ansprüche, **dadurch gekennzeichnet, dass** der Anschlussdraht (66) über einen Teil der um den Fixierungsabschnitt (81) gewundenen Länge von einem nachgiebigen Schlauch (108) umgeben ist.

9. Elektrische Maschine nach Anspruch 8, **dadurch gekennzeichnet, dass** der Schlauch (108) zwischen der Wand (78) des Spulenträgers (60) und dem Arm (90) eingeklemmt ist und eine unregelmäßige Form aufweist.

10. Elektrische Maschine nach Anspruch 9, **dadurch gekennzeichnet, dass** der Schlauch (108) aus Gewebe oder aus Schaummaterial und nachgiebiger als eine direkt auf den Draht aufgebrachte Lackisolation ist.

11. Elektrische Maschine nach einen der vorstehenden Ansprüche, **dadurch gekennzeichnet, dass** der andere Anschlussleiter (66) durch einen Schlitz (130) in der Wand (78) des Spulenträgers (60) vorzugsweise direkt auf den Ringkörperabschnitt (133) geführt ist.

12. Elektrische Maschine nach einem der vorstehenden Ansprüche, **dadurch gekennzeichnet, dass** sich die Klauenpolfinger (24, 25) in axialer oder radialer Richtung erstrecken.

## Claims

1. Electric machine, in particular alternator, having a rotor (20), which has a rotation axis direction and is embodied as a claw-pole rotor, wherein the rotor (20) has, inter alia, two claw-pole boards (22, 23), on the outer circumference of which claw-pole fingers (24, 25) are arranged, wherein a coil former (60) is arranged between the two claw-pole boards (22, 23), said coil former forming an excitation winding (51), wherein the excitation winding (51) has two connection conductors (66), which are each electrically conductively connected to a power supply element that is attached to the rotor (20), wherein the coil former (60) has a wall (78) from which a fixing section (81) extends, wherein one of the connection conductors (66) is looped around the fixing section (81) and the fixing section (81) has, on the end (84) that faces away from the wall (78), undercuts (87) that face away from one another, wherein the fixing section (81) has a cross-sectional area (93) that is oriented around the fixing section (81) perpendicularly to a winding direction of the connection conductor (66), wherein the winding direction is oriented in the rotation axis direction of the rotor (20), **characterized in that** a portion of the fixing section (81) is arranged between the excitation winding (51) and one of the claw-pole boards (22, 23).

2. Electric machine according to Claim 1, **characterized in that** the undercuts (87) are formed by arms (90), wherein, in particular, one of the arms (90) has a radial length that is substantially smaller than the other arm (90).

3. Electric machine according to Claim 1 or 2, **characterized in that** the one connection wire (66) is arranged in a groove (96) in the wall (78), wherein the groove (96) ends in a wire receptacle (99).

4. Electric machine according to one of Claims 1 to 3, **characterized in that** the connection conductor (66) is wound around at least three sides (111, 112, 113) of the fixing section (81).

5. Electric machine according to Claim 4, **characterized in that** the portion of the fixing section (81) that is arranged between the excitation winding (51) and one of the claw-pole boards (22 and 23) is positioned in a depression (120) in the claw-pole board (23) .

6. Electric machine according to Claim 5, **characterized in that** the portion of the fixing section (81) that is arranged between the excitation winding (51) and one of the claw-pole boards (23, 22) is clamped, together with the connection wire (66), between the wall (78) of the coil former (60) and the claw-pole board (22, 23).

7. Electric machine according to Claim 6, **characterized in that** the connection wire (66) is clamped between the wall (78) of the coil former (60) and an arm (90).

8. Electric machine according to one of the preceding claims, **characterized in that** the connection wire (66) is surrounded by a flexible hose (108) over a portion of the length that is wound around the fixing section (81) .

9. Electric machine according to Claim 8, **characterized in that** the hose (108) is clamped between the wall (78) of the coil former (60) and the arm (90) and has an irregular shape.

10. Electric machine according to Claim 9, **characterized in that** the hose (108) is made of fabric or of foam material and is more flexible than a coating insulation that is applied directly to the wire.

11. Electric machine according to one of the preceding claims, **characterized in that** the other connection conductor (66) is lead through a slot (130) in the wall (78) of the coil former (60), preferably directly onto the annular body section (133).

12. Electric machine according to one of the preceding claims, **characterized in that** the claw-pole fingers (24, 25) extend in the axial or the radial direction.

## Revendications

1. Machine électrique, notamment un alternateur, comportant un rotor (20) qui présente une direction d'axe de rotation et qui est réalisé sous la forme d'un rotor à pôles à griffes, dans laquelle le rotor (20) comporte entre autres deux platines de pôles à griffes (22, 23), sur le pourtour extérieur desquelles sont disposés des doigts de pôles à griffes (24, 25), dans laquelle un support de bobines (60) est disposé entre les deux platines de pôles à griffes (22, 23), lequel support porte un enroulement excitateur (51), dans laquelle l'enroulement excitateur (51) présente deux conducteurs de raccordement (66), qui sont respectivement reliés de manière électriquement conductrice à un élément d'alimentation en courant fixé au rotor (20), dans laquelle le support de bobines (60) comporte une paroi (78) à partir de laquelle s'étend une section de fixation (81), dans laquelle l'un des conducteurs de raccordement (66) est passé autour de la section de fixation (81) et la section de fixation (81) comporte sur son extrémité (84) opposée à la paroi (78) des contre-dépouilles opposées l'une à l'autre (87), dans laquelle la section de fixation (81) présente une surface transversale (93) qui est orientée perpendiculairement. à une direction d'enroulement du conducteur de raccordement (66) autour de la section de fixation (81), dans laquelle la direction d'enroulement est orientée dans la direction de l'axe de rotation du rotor (20), **caractérisée en ce qu'**une partie de la section de fixation (81) est disposée entre l'enroulement excitateur (51) et l'une des platines de pôles à griffes (22, 23).

2. Machine électrique selon la revendication 1, **caractérisée en ce que** les contre-dépouilles (87) sont formées par des bras (90), dans laquelle l'un des bras (90) présente notamment une longueur radiale sensiblement plus courte que l'autre bras (90).

3. Machine électrique selon la revendication 1 ou 2, **caractérisée en ce que** ledit fil de connexion (66) est disposé dans une rainure (96) ménagée dans la paroi (78), dans lequel la rainure (96) se termine par un logement pour fil (99).

4. Machine électrique selon l'une quelconque des revendications 1 à 3, **caractérisée en ce que** le conducteur de raccordement (66) est enroulé autour d'au moins trois côtés (111, 112, 113) de la section de fixation (81).

5. Machine électrique selon la revendication 4, **caractérisée en ce que** la partie de la section de fixation (81) qui est disposée entre l'enroulement excitateur (51) et l'une des platines de pôles à griffes (22 et 23) est positionnée dans une cavité (120) qui est ménagée dans la platine à pôles à griffes (23) .

6. Machine électrique selon la revendication 5, **caractérisée en ce que** la partie de la section de fixation (81) qui est disposée entre l'enroulement excitateur (51) et l'une des platines de pôles à griffes (23, 22) est serrée en association avec le fil de connexion (66) entre la paroi (78) du support de bobines (60) et la platine à pôles à griffes (22, 23).

7. Machine électrique selon la revendication 6, **caractérisée en ce que** le fil de connexion (66) est serré entre la paroi (78) du support de bobines (60) et un bras (90).

8. Machine électrique selon l'une quelconque des revendications précédentes, **caractérisée en ce que** le fil de connexion (66) est entouré d'un tuyau souple (108) sur une partie de la longueur enroulée autour de la section de fixation (81).

9. Machine électrique selon la revendication 8, **caractérisée en ce que** le tuyau (108) est serré entre la paroi (78) du support de bobines (60) et le bras (90) et présente une forme irrégulière.

10. Machine électrique selon la revendication 9, **caractérisée en ce que** le tuyau (108) est constitué de tissu ou est constitué d'un matériau en mousse et est plus souple qu'un vernis isolant déposé directement sur le fil.

11. Machine électrique selon l'une quelconque des revendications précédentes, **caractérisée en ce que** l'autre conducteur de raccordement (66) est guidé par une fente (130) dans la paroi (78) du support de bobines (60) de préférence directement sur la section de corps annulaire (133).

12. Machine électrique selon l'une quelconque des revendications précédentes, **caractérisée en ce que** les doigts de pôles à griffes (24, 25) s'étendent dans la direction axiale ou radiale.
